# EUROPEAN PATENT APPLICATION

(11) **EP 4 170 378 A1**
(43) Date of publication of application: **26.04.2023**
(21) Application number: 21203737.8
(22) Date of filing: 20.10.2021
(51) Int. Cl.: G01S 7/35, G01S 7/41, G01S 13/931, G01S 13/34

(54) **METHODS AND SYSTEMS FOR PROCESSING RADAR SENSOR DATA**

(71) Applicant: Aptiv Technologies Limited, St. Michael (BB)
(72) Inventor: NUNN, Christian, 42499 Hückeswagen (DE)
(74) Representative: Manitz Finsterwald Patent- und Rechtsanwaltspartnerschaft mbB

(57) **Abstract**

A computer implemented method for processing radar sensor data comprises the following steps carried out by computer hardware components: acquiring radar sensor data from a radar sensor; and processing the radar sensor data by an artificial neural network to obtain at least one of range radar data or doppler radar data

## Description

### FIELD

The present disclosure relates to methods and systems for processing radar sensor data.

### BACKGROUND

Today in automotive radars Range and Doppler dimensions are extracted using FFTs (fast Fourier transforms) to create a range doppler map. Further processing is then based on those range Doppler maps, including classical angle finding, super resolution and AI (artificial intelligence)/ML (machine learning) applications.

However, FFTs are computationally intensive and may be lossy. The output may be large and may have to be compressed or streamed to avoid excessive hardware requirements.

Accordingly, there is a need to improve performance of the FFT processing.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for processing radar sensor data, the method comprising the following steps performed (in other words: carried out) by computer hardware components:
acquiring radar sensor data from a radar sensor; and processing the radar sensor data by an artificial neural network to obtain at least one of range radar data or doppler radar data.

In other words, range radar data and/or Doppler radar data is obtained using the artificial neural network (for example without using any conventional (fast) Fourier transform). Illustratively speaking, FFTs for obtaining range radar data and/or Doppler radar data are replaced by at least one artificial neural network. The artificial neural network may provide results which are similar or identical to FFTs.

According to an embodiment, the artificial neural network resembles at least one Fourier transform. Thus, the output of the artificial neural network may be equivalent or similar to the output of a FFT.

According to an embodiment, the at least one Fourier transform comprises a fast time Fourier transform. In other words, the artificial neural network resembles a fast time Fourier transform.

According to an embodiment, the at least one Fourier transform comprises a slow time Fourier transform. In other words, the artificial neural network resembles a slow time Fourier transform.

According to an embodiment, the artificial neural network is configured to resemble Fourier transform sample data. The Fourier transform sample data may have been determined using a conventional FFT, and may serve the artificial neural network to be configured to output data similar to FFT data.

According to an embodiment, the artificial neural network is trained using random initialization and pretraining.

According to an embodiment, the artificial neural network comprises a deep neural network. In other words, according to an embodiments, FFTs may be substituted by an artificial neural network, which for example may be a deep neural network. The artificial neural network may be a convolutional neuronal network (CNN). For example, for angle finding, a fully connected front end followed by CNNs may be used to support non-planar and/or non regular antenna arrays. In other embodiments, the artificial neural network may be a graph based neural network or may employ attention functions.

According to an embodiment, the computer implemented method further comprises the following step carried out by the computer hardware components: evaluating an angle finding artificial neural network for angle finding.

According to an embodiment, the computer implemented method further comprises the following step carried out by the computer hardware components: evaluating an object detection artificial neural network for object detection.

According to an embodiment, the computer implemented method further comprises the following step carried out by the computer hardware components: evaluating an object tracking artificial neural network for object tracking.

The artificial neural network may be combined with the angle finding artificial neural network and/or the object detection artificial neural network and/or the object tracking artificial neural network into a common artificial neural network.

According to an embodiment, the computer implemented method is trained end to end. For example, the training may be provided end to end, including the artificial neural network and the angle finding artificial neural network, the object detection artificial neural network and the object tracking artificial neural network (as far as provided in the respective embodiment)-

According to an embodiment, the radar sensor data comprises analog radar sensor data. Thus, the artificial neural network may be the first processing to analyze the radar sensor data, for example in respect to frequencies which are relevant for range information or Doppler information.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein and the radar sensor.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

With the methods and devices as described herein, FFT (fast Fourier transform) functions in (deep) neural networks for machine learning based vehicle radar sensor processing of range and Doppler signals may be provided. According to various embodiments, DNNs (deep neural networks) may be used to replace and improve radar FFTs.

### DRAWINGS

Exemplary embodiments and functions of the present disclosure are described herein in conjunction with the following drawings, showing schematically:
- Fig. 1: an illustration of processing carried out for radar data;
- Fig. 2: a flow diagram illustrating a method for processing radar sensor data according to various embodiments; and
- Fig. 3: a computer system with a plurality of computer hardware components configured to carry out steps of a computer implemented method for processing radar sensor data according to various embodiments.

### DETAILED DESCRIPTION

Today in automotive radars Range and Doppler dimensions are extracted using FFTs (fast Fourier transform) to create a range doppler map. Further processing is then based on those range Doppler maps, including classical angle finding, super resolution and AI (artificial intelligence)/ML (machine learning) applications.

FFTs may be used in a slow time FFT, followed by a fast time FFT, followed by angle finding and object tracking.

Alternatively, a fist time FFT may be followed by a slow time FFT, followed by an angle finding FFT DNN model, followed by a machine learning (ML) DNN.

However, FFTs are computationally intensive and may be lossy. The output may be large and may have to be compressed or streamed to avoid excessive hardware requirements.

For example a range FFT DNN model may be followed by a doppler FFT DNN model, followed by an angle FFT DNN model, followed by a ML DNN.

Alternatively, a fast time FFT may be followed by a Doppler FFT DNN model, followed by an angle FFT DNN model, followed by a ML DNN.

According to various embodiments, performance of the FFT processing may be improved.

Machine learning (ML), for example deep neural networks (DNN) may be used for angle finding. It has been found that DNNs can replace and improve radar angle finding, which is similar to a FFT like function. According to various embodiments, this approach is extended further down to range and Doppler FFTs.

A fast and a slow time FFT may be used to extract range and Doppler information.

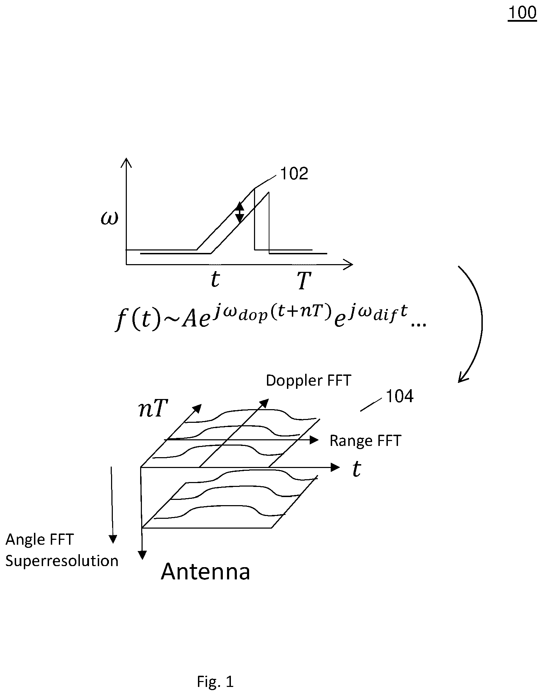

Fig. 1 shows an illustration 100 of processing carried out for radar data, for example for a FMCW radar (frequency modulated continuous wave radar). FMCW radar is an active sensor which measures the distance from time differences between outgoing and incoming wave. An FMCW radar generates a continuous wave with alternating frequencies (in other words: a frequency ramp 102, which may be referred to as a chirp). Downmixing the transmitted and received signal yields the IF (intermediate frequency) signal. The frequencies of the fast time (duration of 1 chirp) IF signal are proportional to the target range (in other words: the distance). The phase variation along multiple chirps measured over a long time (slow time) is proportional to the relative radial Doppler shift induced by the reflectors radial movement. Thus, the received signal may be transformed into a Doppler-range diagram 104, with one plane per antenna.

According to various embodiments, for each FFT (i.e. for range or for Doppler) a DNN structure, e.g. with fully connected dense layers, is selected that can represent a fast furrier function (FFT). This DNN structure may have more flexibility, but there exists a set of parameters that approximate or replicate the desired FFT.

For each FFT (range or doppler), the structure is initialized with a set of parameters. This set of parameters may approximate or replicate the desired FFT or may be generated from random initialization and pretraining.

According to various embodiments, training data for the artificial neuronal network (which may substitute FFTs) may be generated in several ways (including FFT data, super resolution data, simulated data, or real data), as explained in more detail below. According to various embodiments, the artificial neural network may be trained using training data obtained in different ways (in other words, the artificial neural network may be trained using two or more of the following data: FFT data, super resolution data, simulated data, or real data.

According to various embodiments, the artificial neural network may be trained based on FFT data. As the artificial neural network block according to various embodiments substitutes the FFT block, the artificial neural network may be trained to replicate an FFT. This may be useful as a pretraining to pre-set parameters for those early functions and ensure fast convergence for the end to end training which may further refine those FFT block parameters to the actual optimum.

According to various embodiments, the artificial neural network may be trained based on super resolution data. Super resolution methods may be more precise and sharper than FTTs itself, but may be harder to calculate in real time. However, super resolution methods may be used offline as training target or pretraining (similar to the pretraining based on FFT data as described above).

According to various embodiments, the artificial neural network may be trained based on simulated data. Antenna data may be simulated well and with simulation, all permutations of targets may be generated and used to train the artificial neural network(s) for range, doppler and angle extraction.

According to various embodiments, the artificial neural network may be trained based on real data. The artificial neuronal network may be trained using real data which is labeled. Labeling may be done by other sensors modalities, manually annotation or cabin data where e.g. a corner reflector position is configurable. For the end to end model (in other words, for one or more artificial neural networks from input of the radar data to the final output, for example angle, or object tracking, or object detection), an object or scene training may be performed, wherein in an embodiments, just the early elements may be trained with corner reflector targets.

Those DNNs structures may be connected to an existing radar DNN model for angle finding, detection or tracking.

The overall structure may be trained end to end to optimize the initialized set of parameters to maximize overall performance.

Modeling and incorporating those FFT functions into a DNN may provide that during training the function is further optimized, and thus, noise or unwanted or unneeded effects may be filtered out. The resolution may be changed to minimize loss and throughput, data size, and runtime may be further optimized. Furthermore, additional feature dimensions may extract further information.

Optimizing those FFTs may maximize output performance.

Replacing FFTs and required FFT accelerators by using DNN accelerators may reduce cost and may allow to use a more general accelerator architecture.

As the pipeline (for example the DNN) may have less elements (compared to the FFT), the system complexity may be reduced.

The structure according to various embodiments (for example using the DNN) may allow to extract additional data from lowest level data to enable new features (e.g. detect water on ground).

The structure according to various embodiments (for example using the DNN) may allow better data aggregation and may continue processing compared to single scan FFTs as today. In commonly used methods, each scan is performed separate and FFTs are performed afterwards. In contrast thereto, various embodiments may provide combining one or more scans which may further improve radar capabilities. Neuronal networks with memory elements may provide a recurrent structure and may allow to "continue" and keep integrating multiple scans to filter relevant data. Recurrent neuronal networks, Long short term memory, gates neural networks, attention mechanisms and modern neural networks structures as graph neuronal networks may allow to analyze a sequence scans and not just each single scan individually.

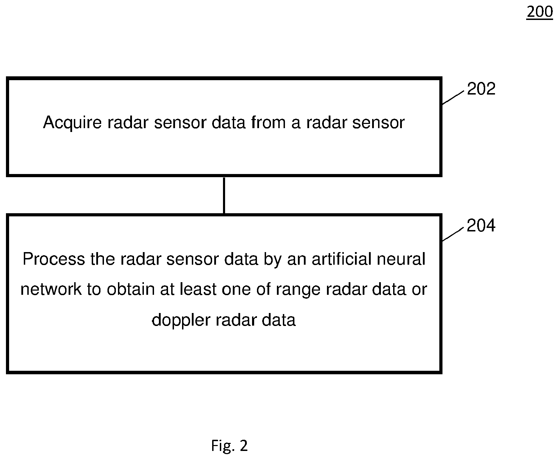

Fig. 2 shows a flow diagram illustrating a method for processing radar sensor data according to various embodiments. At 202, radar sensor data may be acquired from a radar sensor. At 204, the radar sensor data may be processed by an artificial neural network to obtain at least one of range radar data or doppler radar data.

According to various embodiments, the artificial neural network may resemble at least one Fourier transform.

According to various embodiments, the at least one Fourier transform may include or may be a fast time Fourier transform.

According to various embodiments, the at least one Fourier transform may include or may be a slow time Fourier transform.

According to various embodiments, the artificial neural network may be configured to resemble Fourier transform sample data.

According to various embodiments, the artificial neural network may be trained using random initialization and pretraining.

According to various embodiments, the artificial neural network may include or may be a deep neural network.

According to various embodiments, an angle finding artificial neural network may be evaluated for angle finding.

According to various embodiments, an object detection artificial neural network may be evaluated for object detection.

According to various embodiments, an object tracking artificial neural network may be evaluated for object tracking.

According to various embodiments, the method may be trained end to end.

According to various embodiments, the radar sensor data may include or may be analog radar sensor data.

Each of the steps 202, 204, and the further steps described above may be performed by computer hardware components.

According to various embodiments, one or both of the fast time FFT and slow time FFT may be modeled within or by a DNN network. These DNN networks may be combined and trained together with DNNs models for upstream functions like angle finding or object extraction or tracking. Inside the DNN model, range and Doppler extraction may be merged or a DNN model may be followed by a first FFT (e.g. first FFT within radar to compress data follow by a DNN outside of the radar to process radar data to an object level).

According to various embodiments, for training those DNN models, the model may be initialized with FFT parameters or those part can be initially trained independently to mimic FFT outputs.

By directly using a DNN structure the radar ADC (analog to digital conversion) data may change from single aggregated 3D cubes per scan to fully recurrent data inputs and aggregation within the DNN.

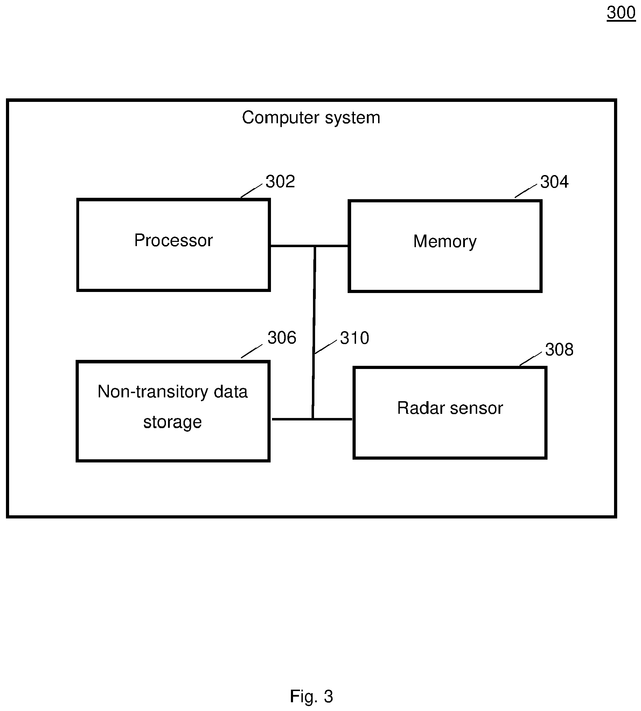

Fig. 3 shows a computer system 300 with a plurality of computer hardware components configured to carry out steps of a computer implemented method for processing radar sensor data according to various embodiments. The computer system 300 may include a processor 302, a memory 304, and a non-transitory data storage 306. A radar sensor 308 may be provided as part of the computer system 300 (like illustrated in Fig. 3), or may be provided external to the computer system 300.

The processor 302 may carry out instructions provided in the memory 304. The non-transitory data storage 306 may store a computer program, including the instructions that may be transferred to the memory 304 and then executed by the processor 302. The radar sensor 308 may be used for determining the radar sensor data.

The processor 302, the memory 304, and the non-transitory data storage 306 may be coupled with each other, e.g. via an electrical connection 310, such as e.g. a cable or a computer bus or via any other suitable electrical connection to exchange electrical signals. The radar sensor 308 may be coupled to the computer system 300, for example via an external interface, or may be provided as parts of the computer system (in other words: internal to the computer system, for example coupled via the electrical connection 310).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 300.

### Reference numeral list

- 100: illustration of processing carried out for radar data
- 102: frequency ramp
- 104: Doppler-range diagram

- 200: flow diagram illustrating a method for processing radar sensor data according to various embodiments
- 202: step of acquiring radar sensor data from a radar sensor
- 204: step of processing the radar sensor data by an artificial neural network to obtain at least one of range radar data or doppler radar data

- 300: computer system according to various embodiments
- 302: processor
- 304: memory
- 306: non-transitory data storage
- 308: radar sensor
- 310: connection

## Claims

1. Computer implemented method for processing radar sensor data,
the method comprising the following steps carried out by computer hardware components:
- acquiring (202) radar sensor data from a radar sensor (308); and
- processing (204) the radar sensor data by an artificial neural network to obtain at least one of range radar data or doppler radar data.

2. The computer implemented method of claim 1,
wherein the artificial neural network resembles at least one Fourier transform.

3. The computer implemented method of claim 2,
wherein the at least one Fourier transform comprises a fast time Fourier transform.

4. The computer implemented method of at least one of claims 2 or 3,
wherein the at least one Fourier transform comprises a slow time Fourier transform.

5. The computer implemented method of at least one of claims 1 to 4,
wherein the artificial neural network is configured to resemble Fourier transform sample data.

6. The computer implemented method of at least one of claims 1 to 5,
wherein the artificial neural network is trained using random initialization and pretraining.

7. The computer implemented method of at least one of claims 1 to 6,
wherein the artificial neural network comprises a deep neural network.

8. The computer implemented method of at least one of claims 1 to 6, further comprising the following step carried out by the computer hardware components:
evaluating an angle finding artificial neural network for angle finding.

9. The computer implemented method of at least one of claims 1 to 8, further comprising the following step carried out by the computer hardware components:
evaluating an object detection artificial neural network for object detection.

10. The computer implemented method of at least one of claims 1 to 9, further comprising the following step carried out by the computer hardware components:
evaluating an object tracking artificial neural network for object tracking.

11. The computer implemented method of at least one of claims 1 to 10,
wherein the computer implemented method is trained end to end.

12. The computer implemented method of at least one of claims 1 to 11,
wherein the radar sensor data comprises analog radar sensor data.

13. Computer system (300), the computer system (300) comprising a plurality of computer hardware components configured to carry out steps of the computer implemented method of at least one of claims 1 to 12.

14. Vehicle comprising the computer system (300) of claim 13 and the radar sensor (308).

15. Non-transitory computer readable medium comprising instructions for carrying out the computer implemented method of at least one of claims 1 to 12.
